# EUROPEAN PATENT APPLICATION

(11) **EP 3 379 609 A1**
(43) Date of publication of application: **26.09.2018**
(21) Application number: 17161854.9
(22) Date of filing: 20.03.2017
(51) Int. Cl.: H01M 2/34, H02H 7/18, H01H 37/74

(54) **SAFETY RELAY FOR A BATTERY CELL**

(71) Applicant: Lithium Energy and Power GmbH & Co. KG, 70469 Stuttgart (DE)
(72) Inventor: Wille, Christopher, 70563 Stuttgart (DE); Rodriguez Alvarez, Humberto, 70806 Kornwestheim (DE)
(74) Representative: Bee, Joachim

(57) **Abstract**

The invention refers to a safety relay (10) for a battery cell, comprising two current collectors (21, 22) and a safety stack (30) arranged between the current collectors (21, 22), the safety stack (30) comprising at least one insulation layer (33, 37) for insulating the current collectors (21, 22), at least one solder layer (34, 36) comprising a solder material (40) and at least one reactive layer (35) for melting the solder material (40). A force (F) is applied to the current collectors (21, 22) pressing the current collectors (21, 22) against the safety stack (30), such that when the solder material (40) is molten, the solder material (40) is extruded laterally out of the safety stack (30) such that the solder material (40) is joining the current collectors (21, 22). The invention also refers to a battery cell, comprising a safety relay (10) according to the invention.

## Description

The invention relates to a safety relay for a battery cell, comprising two current collectors and a safety stack that is arranged between the two current collectors, the safety stack comprising at least one insulation layer for insulating the current collectors, at least one solder layer comprising a solder material and at least one reactive layer for melting the solder material. The invention also relates to a battery cell that comprises a safety relay according to the invention.

### State of the Art

Electrical energy can be stored by means of batteries. Batteries change chemical energy into electrical energy. Particularly, rechargeable batteries are known that can be charged and discharged several times. Batteries or battery modules comprise several battery cells, in particular lithium ion battery cells, which are connected electrically in series or in parallel. Lithium ion battery cells are used for instance in motor vehicles, in particular in electric vehicles (EV), in hybrid electric vehicles (HEV) and in plug-in hybrid vehicles (PHEV). A battery cell has a positive terminal and a negative terminal.

In case of error, a battery cell can be discharged to avoid critical situations. To this end, discharging devices are known. Such a discharging device, also called safety relay, is a bypass element that is connected to the terminals of the battery cell. In normal operation of the battery cell, the safety relay is in off-state and insulates the terminals of the battery cell electrically. In case of error, the safety relay is activated and then joins the terminals of the battery cell electrically. Hence, a discharging current is flowing through the safety relay and the battery cell is discharged.

Document DE 10 2012 005 979 B4 discloses a bypass element for bypassing a battery cell of an electric energy storage. The bypass element comprises two current collectors and a safety stack arranged in between. The safety stack comprises two solder layers that are arranged each facing one current collector, two insulation layers arranged between the solder layers and a reactive layer arranged between the insulation layers. When the reactive layer is activated, an exothermic reaction takes place and the insulation layers are disintegrated. Thus, the electric conductive solder layers are getting in contact with one another and hence, the current collectors are joined electrically.

Document US 6,991,856 B2 discloses reactive multilayer foils as localized heat sources. Such foils inter alia are usable in activation layers of a safety relay for a battery cell.

Document US 7,361,412 B2 discloses nanostructured soldered joints made with reactive multilayer foils. Thereat, soldered joints are made by reactions in nanostructured multilayer foils providing rapid burst of heat.

Document DE 10 2011109 240 A1 discloses a method for electrical joining of contact elements with current connectors. Thereat, a reactive multilayer foil and a solder layer are provided. The contact elements and the current connectors are pressed against the reactive multilayer foil and the reactive multilayer foil is activated to melt the solder layer.

Document JP 2006 252804 A discloses a bypass switch wherein a closing operation is promptly performed. The bypass switch is provided with a pressure device pressuring a movable conductor in a vertical direction and a heat starting device.

Document US 2015/0079425 A1 discloses a bypass switch that includes a pair of fixed conductors connected in parallel with a battery cell, a movable conductor disposed in a vertical direction with respect to the pair of fixed conductors and a thermally actuated device.

### Disclosure of the Invention

A safety relay for a battery cell is proposed. The safety relay comprises two current collectors and a safety stack that is arranged between the current collectors. The safety stack comprises at least one insulation layer for insulating the current collectors, at least one solder layer which comprises a solder material and at least one reactive layer for melting the solder material. The layers of the safety stack are stacked on top of each other in a stacking direction. When the safety relay is in off-state, the solder material is in solid state. The reactive layer for example comprises a reactive foil that can be activated by activation means, for example by a voltage source.

The current collectors can be connected to terminals of a battery cell, in particular a lithium ion battery cell. When the safety relay is in off-state, the terminals of the battery cell are insulated electrically from one another. When the safety relay is in on-state, the terminals of the battery cell are joined electrically to one another permanently.

According to the invention, a force is applied to the current collectors which is pressing the current collectors against the safety stack that is arranged in between, such that when the solder material is molten, the solder material is extruded laterally, that means at least almost orthogonally to the stacking direction, out of the safety stack such that the solder material is joining the current collectors. The solder material can be molten by an exothermic reaction which takes place when the reactive layer is activated. Respective activation means are provided to activate the reactive layer, for example a voltage source. Joining the current collectors in particular takes place when the solder material is solidified.

According to a further development of the invention, a cavity is provided to retain the molten solder material that is extruded laterally out of the safety stack. Hence, when the molten solder material is extruded out of the safety stack, the solder material remains within the cavity and in an area between the current collectors. Thus, the solder material is solidified within said area between the current collectors.

According to an embodiment of the invention, the cavity is formed of a housing that surrounds the safety stack. Thereat, the current collectors preferably protrude through the housing. That means, the current collectors are arranged partly inside the housing and partly outside the housing.

According to a further development of the invention, a spring element is arranged between the housing and at least one of the two current collectors to apply the force to the current collectors. Hence, the spring element is pressing one of the current collectors against the safety stack and against the other current collector. In particular, two spring elements can be provided, whereat each spring element applies a force to one of the current collectors pressing the current collectors against the safety stack.

According to another embodiment of the invention, the cavity is formed of at least one of the two current collectors. That means, the current collector is shaped such that the current collector can retain the molten solder material.

According to a further development of the invention, an expansion material is arranged within the at least one solder layer that can be activated by the reactive layer. The expansion material has a larger vapour pressure than the solder material. Hence, when the expansion material is activated, the expansion material expands and extrudes the solder material out of the safety stack.

Preferably, the safety stack of the safety relay is shaped and arranged such that the at least one insulation layer is arranged adjacent to one of the two current collectors.

Further preferably, the safety stack of the safety relay is shaped and arranged such that the at least one reactive layer is arranged adjacent to the at least one solder layer. In particular, the insulation layer is not arranged between the solder layer and the reactive layer. Hence, the exothermic reaction of the reactive layer takes place adjacent to the solder layer and the solder layer can be molten quickly.

According to a preferred embodiment of the invention, the safety stack comprises in the following order:
a first insulation layer,
a first solder layer,
a reactive layer,
a second solder layer and
a second insulation layer.

Hence, the one reactive layer is arranged centrally, two solder layers are surrounding the reactive layer and two insulation layers are surrounding the reactive layer and the solder layers. Thereat, each of the insulations layers is arranged adjacent to one of the two current collectors.

Also, a battery cell is proposed that comprises a safety relay according to the invention. Such a battery cell is usable advantageously in particular in an electric vehicle (EV), in a hybrid electric vehicle (HEV) or in a plug-in hybrid vehicle (PHEV) or stationary.

### Advantages of the Invention

The safety stack according to the invention allows a quick change from off-state to on-state and hence a quick electrical joining of the terminals of a connected battery cell. Hence, in case of error, the battery terminals are bypassed and the battery cell is discharged. Thus, critical situations of the battery cell can be avoided. The change from off-state to on-state of the safety relay takes place in a time range of some milliseconds. Thereat, disintegration of the insulation layer is not necessary. In on-state, the solder material is arranged besides the insulations layer and hence the current collectors are joined electrically although the insulation layer is still present. Hence, the insulation material is not necessarily made of a polymer. Other materials, for example ceramics, are also feasible.

### Brief Description of the Drawings

For a better understanding of the aforementioned embodiments of the invention as well as additional embodiments thereof, reference should be made to the description of embodiments below, in conjunction with the appended drawings showing:
- Figure 1: a schematic view at a first embodiment of a safety relay in off-state,
- Figure 2: a schematic view at the first embodiment of a safety relay from figure 1 in on-state,
- Figure 3: a schematic view at a second embodiment of a safety relay in off-state,
- Figure 4: a schematic view at a third embodiment of a safety relay in off-state,
- Figure 5: a schematic view at a fourth embodiment of a safety relay in off-state,
- Figure 6: a schematic view at a fifth embodiment of a safety relay in off-state,
- Figure 7: a schematic view at a sixth embodiment of a safety relay in off-state and
- Figure 8: a schematic view at a seventh embodiment of a safety relay in off-state.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

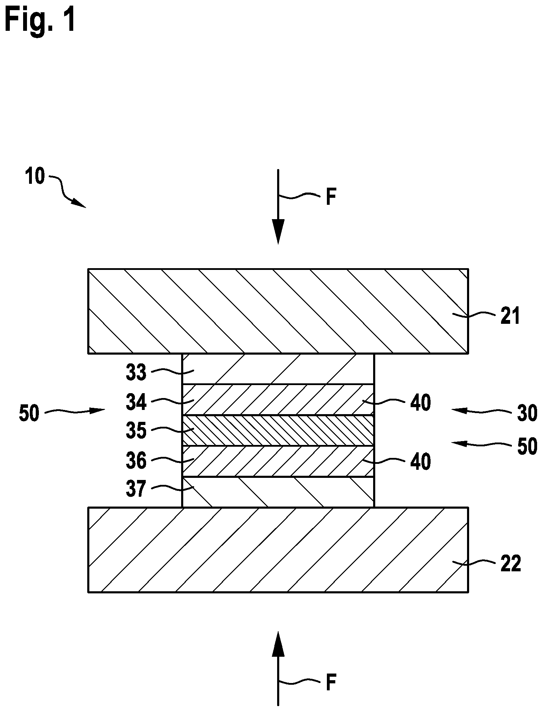

Figure 1 shows a schematic view at a first embodiment of a safety relay 10 in off-state. The safety relay 10 comprises a first current collector 21, a second current collector 22 and a safety stack 30 which is arranged between the first current collector 21 and the second current collector 22. The current collectors 21, 22 are made of an electrical conductive material and are connected to the terminals of a battery cell, for example a lithium ion battery cell.

The safety stack 30 comprises one reactive layer 35 that is arranged centrally. The safety stack 30 further comprises a first solder layer 34 and a second solder layer 36. The first solder layer 34 and the second solder layer 36 are surrounding the reactive layer 35. The safety stack 30 also comprises a first insulation layer 33 and a second insulation layer 37. Thereat, the first insulation layer 33 and the second insulation layer 37 are surrounding the reactive layer 35 and the solder layers 34, 36.

The first insulation layer 33 is arranged adjacent to the first current collector 21. The second insulation layer 37 is arranged adjacent to the second current collector 22. Hence, the current collectors 21, 22 are electrically insulated from one another. Thus, the terminals of the battery cell are also electrically insulated from one another.

The first solder layer 34 and the second solder layer 36 each comprise a solder material 40. At a temperature of for example 20 °C, the solder material 40 is in solid state. The reactive layer 35 that is arranged between the first solder layer 34 and the second solder layer 36 comprises a reactive foil that can be activated by activation means, for example by a voltage source. When the reactive foil of the reactive layer 35 is activated, an exothermic reaction takes place and the solder material 40 is melting.

A force F is applied to the first current collector 21 and to the second current collector 22. The force F is pressing the first current collector 21 and the second current collector 22 against the safety stack 30 which is arranged in between. Furthermore, cavities 50 are provided between the first current collector 21 and the second current collector 22 and adjacent to the safety stack 30 arranged in between.

In case of error of the battery cell, the reactive foil of the reactive layer 35 is activated by the activation means. Hence, an exothermic reaction takes place and the solder material 40 of the solder layers 34, 36 is melting. The molten solder material 40 is extruded laterally out of the safety stack 30 by dint of the force F. Thereat, the molten solder material 40 is pressed into the cavities 50 and is retained within said cavities 50.

The molten solder material 40 remains within the cavities 50 in an area between the current collectors 21, 22. Thereby, the molten solder material 40 gets in contact with the first current collector 21 and the second current collector 22. Then, the solder material 40 is solidified within said area between the current collectors 21, 22 within the cavities 50. In particular, when the solder material 40 is solidified joining of the current collectors 21, 22 takes place.

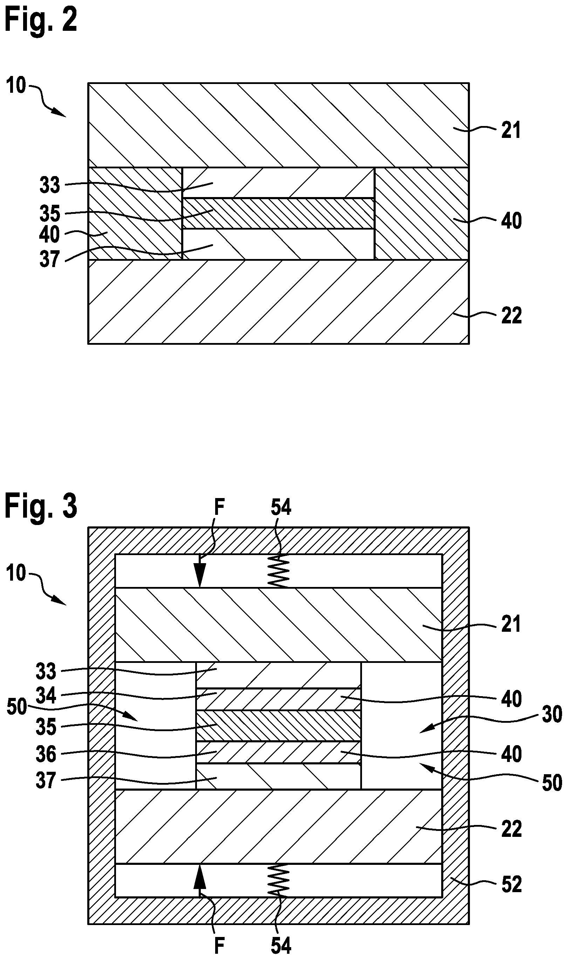

Hence, the current collectors 21, 22 are joined electrically and thus, the safety relay 10 is in on-state. Figure 2 shows a schematic view at the first embodiment of a safety relay 10 from figure 1 in on-state. Thus, the terminals of the battery cell are joined electrically to one another permanently, and the battery cell is discharged. The solder material 40 fills the cavities 50 between the current collectors 21, 22 completely or partly.

Figure 3 shows a schematic view at a second embodiment of a safety relay 10 in off-state. The safety relay 10 comprises a first current collector 21, a second current collector 22 and a safety stack 30 which is arranged between the first current collector 21 and the second current collector 22. The current collectors 21, 22 are made of an electrical conductive material and are connected to the terminals of a lithium ion battery cell. The safety stack 30 is designed like the safety stack 30 of the first embodiment of the safety relay 10.

The safety relay 10 comprises a housing 52 that surrounds the safety stack 30 and the current collectors 21, 22. Electrical connections which connect the current collectors 21, 22 to the terminals of the battery cell that are not shown here protrude through the housing 52. The housing 52 forms the cavities 50 to retain the molten solder material 40.

A spring element 54 is arranged between the housing 52 and the first current collector 21. Another spring element 54 is arranged between the housing 52 and the second current collector 22. The spring elements 54 apply the force F to the current collectors 21, 22. Thereat, the spring elements 54 are pressing the current collectors 21, 22 against the safety stack 30.

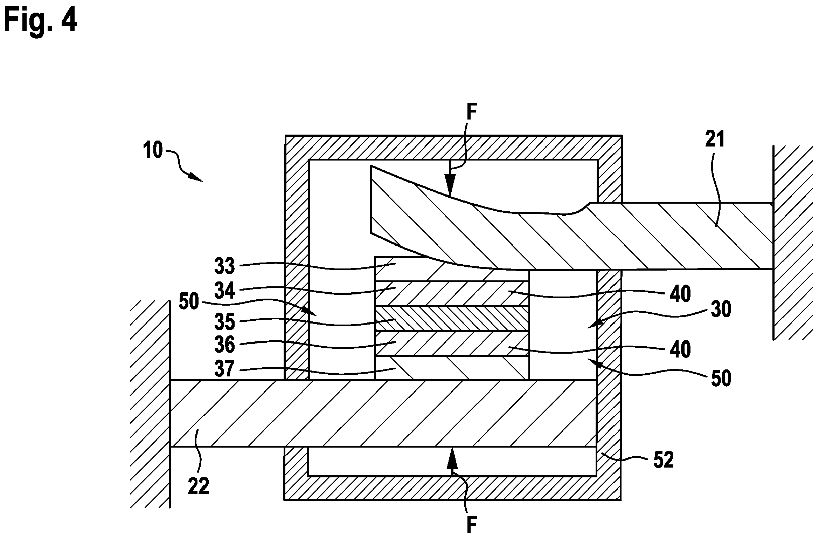

Figure 4 shows a schematic view at a third embodiment of a safety relay 10 in off-state. The safety relay 10 comprises a first current collector 21, a second current collector 22 and a safety stack 30 which is arranged between the first current collector 21 and the second current collector 22. The current collectors 21, 22 are made of an electrical conductive material and are connected to the terminals of a lithium ion battery cell. The safety stack 30 is designed like the safety stack 30 of the first embodiment of the safety relay 10.

The safety relay 10 comprises a housing 52 that surrounds the safety stack 30. The current collectors 21, 22 are arranged partly inside the housing 52 and partly outside the housing 52. Hence, the current collectors 21, 22 protrude through the housing 52. The housing 52 forms the cavities 50 to retain the molten solder material 40.

The force F that is applied to the first current collector 21 and a counterforce F applied to the second current collector 22 are caused by an elastic deformation of the first current collector 21. Certainly, the second current collector 22 also could be elastically deformed.

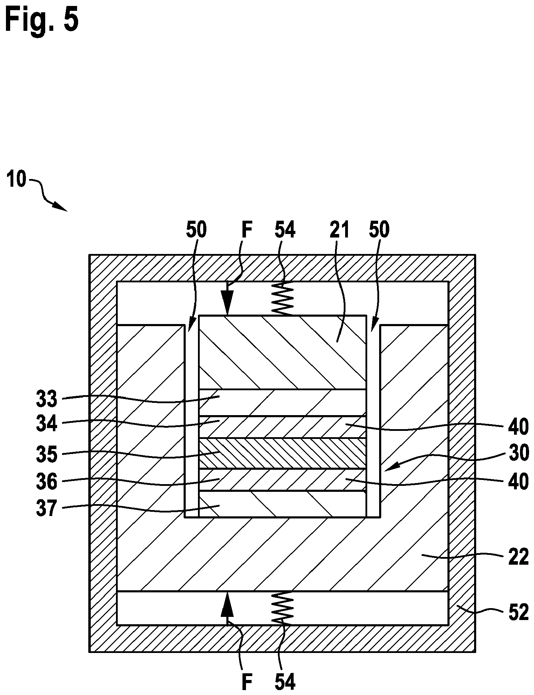

Figure 5 shows a schematic view at a fourth embodiment of a safety relay 10 in off-state. The safety relay 10 comprises a first current collector 21, a second current collector 22 and a safety stack 30 which is arranged between the first current collector 21 and the second current collector 22. The current collectors 21, 22 are made of an electrical conductive material and are connected to the terminals of a lithium ion battery cell. The safety stack 30 is designed like the safety stack 30 of the first embodiment of the safety relay 10.

The safety relay 10 comprises a housing 52 that surrounds the safety stack 30 and the current collectors 21, 22. Electrical connections which connect the current collectors 21, 22 to the terminals of the battery cell that are not shown here protrude through the housing 52.

A spring element 54 is arranged between the housing 52 and the first current collector 21. Another spring element 54 is arranged between the housing 52 and the second current collector 22. The spring elements 54 apply the force F to the current collectors 21, 22. Thereat, the spring elements 54 are pressing the current collectors 21, 22 against the safety stack 30.

The second current collector 22 is formed like a pot and receives the safety stack 30. Hence, the second current collector 22 forms the cavity 50 to retain the molten solder material 40.

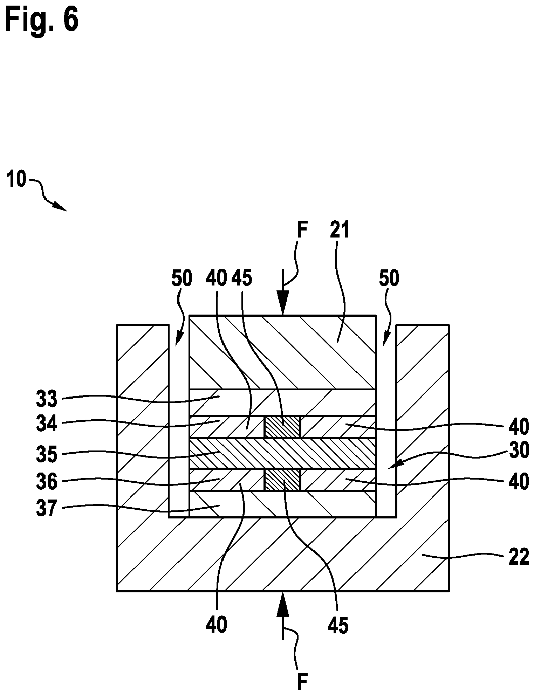

Figure 6 shows a schematic view at a fifth embodiment of a safety relay 10 in off-state. The safety relay 10 comprises a first current collector 21, a second current collector 22 and a safety stack 30 which is arranged between the first current collector 21 and the second current collector 22. The current collectors 21, 22 are made of an electrical conductive material and are connected to the terminals of a lithium ion battery cell.

The safety stack 30 is almost designed like the safety stack 30 of the first embodiment of the safety relay 10. Additionally, an expansion material 45 is arranged within the first solder layer 34 and within the second solder layer 36. The expansion material 45 also can be activated by the reactive foil of the reactive layer 35. When the expansion material 45 is activated, the expansion material 45 expands and extrudes the solder material 40 out of the safety stack 30 into the cavity 50.

The second current collector 22 is formed like a pot and receives the safety stack 30. Hence, the second current collector 22 forms the cavity 50 to retain the molten solder material 40. The force F that is applied to the first current collector 21 and to the second current collector 22 is caused by gravitational force of the first current collector 21.

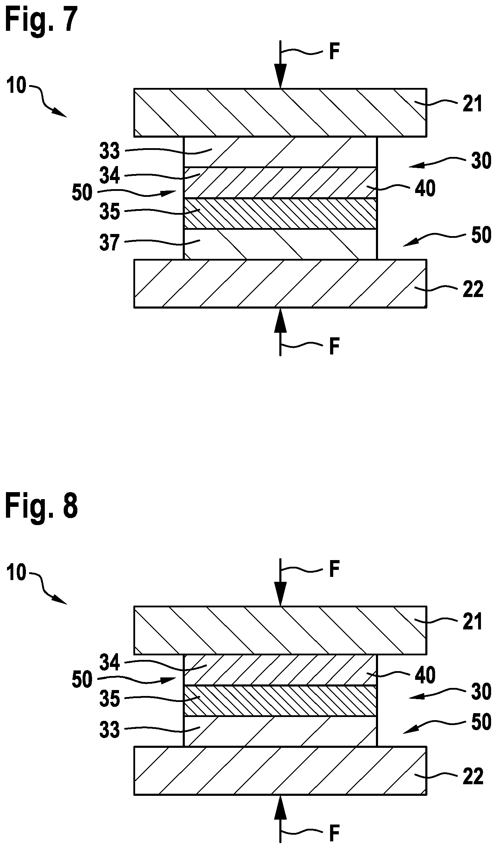

Figure 7 shows a schematic view at a sixth embodiment of a safety relay 10 in off-state. The safety relay 10 comprises a first current collector 21, a second current collector 22 and a safety stack 30 which is arranged between the first current collector 21 and the second current collector 22. The current collectors 21, 22 are made of an electrical conductive material and are connected to the terminals of a lithium ion battery cell.

A force F is applied to the first current collector 21 and to the second current collector 22. The force F is pressing the first current collector 21 and the second current collector 22 against the safety stack 30 which is arranged in between. Furthermore, cavities 50 are provided between the first current collector 21 and the second current collector 22 and adjacent to the safety stack 30 arranged in between.

The safety stack 30 comprises one reactive layer 35, one first solder layer 34, a first insulation layer 33 and a second insulation layer 37. Thereat, the first insulation layer 33 and the second insulation layer 37 are surrounding the reactive layer 35 and the first solder layer 34. The first insulation layer 33 is arranged adjacent to the first current collector 21. The second insulation layer 37 is arranged adjacent to the second current collector 22.

Figure 8 shows a schematic view at a seventh embodiment of a safety relay 10 in off-state. The safety relay 10 comprises a first current collector 21, a second current collector 22 and a safety stack 30 which is arranged between the first current collector 21 and the second current collector 22. The current collectors 21, 22 are made of an electrical conductive material and are connected to the terminals of a lithium ion battery cell.

A force F is applied to the first current collector 21 and to the second current collector 22. The force F is pressing the first current collector 21 and the second current collector 22 against the safety stack 30 which is arranged in between. Furthermore, cavities 50 are provided between the first current collector 21 and the second current collector 22 and adjacent to the safety stack 30 arranged in between.

The safety stack 30 comprises one reactive layer 35, one first solder layer 34 and one first insulation layer 33. Thereat, the first insulation layer 33 and the first solder layer 34 are surrounding the reactive layer 35. The first insulation layer 33 is arranged adjacent to the second current collector 22. The first solder layer 34 is arranged adjacent to the first current collector 21.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Safety relay (10) for a battery cell, comprising
two current collectors (21, 22) and
a safety stack (30) arranged between the current collectors (21, 22), the safety stack (30) comprising
at least one insulation layer (33, 37) for insulating the current collectors (21, 22),
at least one solder layer (34, 36) comprising a solder material (40) and at least one reactive layer (35) for melting the solder material (40), **characterized in that**
a force (F) is applied to the current collectors (21, 22) pressing the current collectors (21, 22) against the safety stack (30), such that
when the solder material (40) is molten, the solder material (40) is extruded laterally out of the safety stack (30) such that
the solder material (40) is joining the current collectors (21, 22).

2. Safety relay (10) according to claim 1, **characterized in that**
a cavity (50) is provided to retain the molten solder material (40) that is extruded laterally out of the safety stack (30).

3. Safety relay (10) according to claim 2, **characterized in that**
the cavity (50) is formed of a housing (52) that surrounds the safety stack (30).

4. Safety relay (10) according to claim 3, **characterized in that**
a spring element (54) is arranged between the housing (52) and at least one of the two current collectors (21, 22) to apply the force (F).

5. Safety relay (10) according to claim 2, **characterized in that**
the cavity (50) is formed of at least one of the two current collectors (21, 22).

6. Safety relay (10) according to one of the preceding claims, **characterized in that**
an expansion material (45) is arranged within the at least one solder layer (34, 36) that can be activated by the reactive layer (35).

7. Safety relay (10) according to one of the preceding claims, **characterized in that**
the safety stack (30) is shaped and arranged such that the at least one insulation layer (33, 37) is arranged adjacent to one of the two current collectors (21, 22).

8. Safety relay (10) according to one of the preceding claims, **characterized in that**
the safety stack (30) is shaped and arranged such that the at least one reactive layer (35) is arranged adjacent to the at least one solder layer (34, 36).

9. Safety relay (10) according to one of the preceding claims, **characterized in that**
the safety stack (30) comprises in the following order:
a first insulation layer (33),
a first solder layer (34),
a reactive layer (35),
a second solder layer (36) and
a second insulation layer (37).

10. Battery cell, comprising a safety relay (10) according to one of the preceding claims.
